(19) 

Europäisches
Patentamt

European
Patent Office

Office européen
des brevets

(11) **EP 4 607 813 A1**

(12) **EUROPEAN PATENT APPLICATION**
published in accordance with Art. 153(4) EPC

(43) Date of publication:
**27.08.2025 Bulletin 2025/35**

(21) Application number: **23910526.5**

(22) Date of filing: **25.12.2023**

(51) International Patent Classification (IPC):
*H04B 7/0456* (2017.01)

(52) Cooperative Patent Classification (CPC):
**H04B 7/0456; H04B 7/06**

(86) International application number:
**PCT/CN2023/141656**

(87) International publication number:
**WO 2024/140601 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.12.2022 CN 202211708003**

(71) Applicant: **ZTE Corporation
Shenzhen, Guangdong 518057 (CN)**

(72) Inventors:
• **JIAN, Mengnan
Shenzhen, Guangdong 518057 (CN)**

• **CHEN, Yijian
Shenzhen, Guangdong 518057 (CN)**
• **YU, Hongkang
Shenzhen, Guangdong 518057 (CN)**
• **ZHANG, Shujuan
Shenzhen, Guangdong 518057 (CN)**
• **SI, Yuan
Shenzhen, Guangdong 518057 (CN)**
• **WANG, Yunlu
Shenzhen, Guangdong 518057 (CN)**
• **SUN, Yunqi
Shenzhen, Guangdong 518057 (CN)**

(74) Representative: **Ziebig Hengelhaupt Intellectual
Property Attorneys
Patentanwaltskanzlei PartGmbB
Leipziger Straße 49
10117 Berlin (DE)**

(54) **CHANNEL INFORMATION FEEDBACK METHOD, APPARATUS, AND STORAGE MEDIUM**

(57)     A channel information feedback method, an apparatus, and a storage medium, relating to the technical field of communications, and capable of improving the convenience and accuracy of channel information feedback. The channel information feedback method comprises: acquiring channel information; determining a target codeword from a codebook set according to the channel information, the codebook set comprising multiple codewords, and each codeword consisting of one or more codeword blocks; and sending an indication parameter of the target codeword.

FIG. 2

EP 4 607 813 A1

## Description

The present disclosure claims a priority of Chinese Patent Application No. 202211708003.1, filed on December 28, 2022, the entire content of which is incorporated into this application by reference.

## TECHNICAL FIELD

The present disclosure relates to the field of communication technologies, and in particular, relates to a channel information feedback method, an apparatus, and a storage medium.

## BACKGROUND

Massive multiple-input multiple-output (MIMO) is one of key technologies for the 5th generation (5G) wireless communication system and the upcoming 6th generation (6G) wireless communication system. A precoding technology is usually used in an MIMO system to improve a channel state, so as to enhance an effect of spatial multiplexing. In the precoding technology, a precoding matrix that matches with a channel is used to process a data stream for the spatial multiplexing, whereby achieving precoding for the channel. Therefore, the implementation of the precoding technology requires a terminal to use a codebook to feed back accurate channel information to a network device.

With the development and advancement of wireless communication technologies, currently, there is an increasing demand for an array with large-scale unit antennas or elements, and there are more and more near-field communication scenarios in actual implementations. However, current codebook designs generally focus only on a parameter in a single angular dimension, and cannot satisfy the requirements for precoding performance and communication quality in the near-field communication scenarios.

## SUMMARY

The present disclosure provides a channel information feedback method, an apparatus and a storage medium, which may enhance the convenience and accuracy of channel information feedback.

To achieve the purposes mentioned above, the present disclosure adopts the following technical solutions.

In a first aspect, embodiments of the present disclosure provide a channel information feedback method, and the method includes:

acquiring channel information;

determining, according to the channel information, a target codeword from a codebook set, where the codebook set includes a plurality of codewords, and each of the codewords consists of one or more codeword blocks; and

transmitting an indication parameter of the target codeword.

In a second aspect, the embodiments of the present disclosure further provide a communication apparatus, and the apparatus includes:

a transceiving module, configured to acquire channel information; and

a processing module, configured to determine, according to the channel information, a target codeword from a codebook set, where the codebook set includes a plurality of codewords, and each of the codewords consists of one or more codeword blocks.

The transceiving module is further configured to transmit an indication parameter of the target codeword.

In a third aspect, the embodiments of the present disclosure further provide a communication apparatus, and the communication includes:

a memory and a processor; where the memory is coupled with the processor; the memory is configured to store a computer program; and the processor, when executing the computer program, implements the method provided in the first aspect mentioned above.

In a fourth aspect, the embodiments of the present disclosure further provide a computer-readable storage medium, and the computer-readable storage medium has computer instructions stored thereon. The computer instructions, when executed on an electronic device, cause the electronic device to perform the method provided in the first aspect mentioned above.

In a fifth aspect, the embodiments of the present disclosure further provide a computer program product, and the computer program product includes computer program instructions. The computer program instructions, when executed by a processor, implement the method provided in the first aspect mentioned above.

Based on the channel information feedback method provided in the embodiments of the present disclosure, in the embodiments of the present disclosure, indication parameters used to indicate codewords adopted for precoding are not independent from each other, and there is a correlation between different indication parameters, so that the convenience and accuracy of channel information feedback may be enhanced. Also, a number of indication parameters fed back may be reduced, to alleviate a transmission burden.

BRIEF DESCRIPTION OF THE DRAWINGS

The drawings are used to provide a further understanding for the technical solutions of the present disclosure, constitute a part of the specification, are used to explain the technical solutions of the present disclosure in conjunction with the embodiments of the present disclosure, and do not constitute a limitation on the technical solutions of the present disclosure.

FIG. 1 is a schematic diagram of an architecture of a communication system provided in the present disclosure.
FIG. 2 is a method flowchart of a channel information feedback method provided in the embodiments of the present disclosure.
FIG. 3 is a structural schematic diagram of a communication apparatus provided in the embodiments of the present disclosure.
FIG. 4 is a structural schematic diagram of a communication apparatus provided in the embodiments of the present disclosure.

DETAILED DESCRIPTION

The technical solutions in the embodiments of the present disclosure will be described clearly and completely below in conjunction with the drawings in the embodiments of the present disclosure, and it is obvious that the described embodiments are only a part of the embodiments of the present disclosure, but not all of the embodiments. Based on the embodiments in the present disclosure, all other embodiments obtained by those ordinary skilled without creative efforts shall fall within the protection scope of the present disclosure.

It should be noted that all directional indications (such as upper, lower, left, right, front, back, etc.) in the embodiments of the present disclosure are only used to explain relative positional relationships, movements, etc., of various components under a specific posture (as shown in the drawings), and if the specific posture changes, the directional indications also change accordingly.

The terms "first" and "second", etc., are used for descriptive purposes only, but cannot be understood as indicating or implying relative importance or implicitly specifying the number of the indicated technical features. Thus, features defined with "first" or "second", etc., may explicitly or implicitly include one or more such features. In the description of the present disclosure, unless otherwise specified, "multiple / a/the plurality of" means two or more.

In the description of the present disclosure, it should be noted that, unless explicitly specified or limited, the terms "interconnected" or "connected / coupled" should be understood broadly, and for example, they may refer to a fixed connection, a detachable connection, or an integral connection. Those ordinary skilled in the art may understand the specific meanings of the above terms in the present disclosure in specific cases. Additionally, when describing a pipeline, the terms "interconnected" or "connected / coupled" in the present disclosure means conduction. The specific meaning should be understood in conjunction with the context.

In the embodiments of the present disclosure, the words, such as "exemplary / exemplarily" or "for example", are used to represent an example, an illustration or an explanation. Any embodiment or design solution described with "exemplary / exemplarily" or "for example" in the embodiments of the present disclosure should not be construed as preferred or advantageous over other embodiments or design solutions. Rather, the usage of the words, such as "exemplary / exemplarily" or "for example", is intended to present relevant concepts in a specific manner.

A large quantity of antennas need to be deployed in a massive MIMO system, to enhance a spectrum and an energy efficiency of an entire radio channel. A large quantity of antenna units and transceiving units may be included in an antenna (antennas) deployed by a base station. For example, a number of antenna units and a number of transceiving units may each be 128, 256 or 512. An antenna array consisting of a large quantity of antenna units may also be configured in a terminal. Also, in the sixth generation mobile communication technology, a concept of ultra-large-scale MIMO is proposed, and the number of antennas in the base station is further increased. In addition, an intelligent metasurface (a reconfigurable intelligent surface), as a possible new technology for the sixth generation mobile communication technology (6G), may have units with the number up to thousands or even tens of thousands in the technology, and also face the problems of a change in channel characteristics and of a change in transmission designs caused by the extremely large number of units.

Generally speaking, in a 5G communication system, a transmitting end and a receiving end may adopt and support a transmission scheme based on a codebook. The transmitting end and the receiving end (e.g., a base station and a terminal device) may be pre-configured with a plurality of codebooks, each codebook of which contains a plurality of precoding matrices, then determine, by a selected codebook, a precoding matrix contained in the codebook, and adopt the precoding matrix finally determined in the codebook for a data transmission. During a communication process, the base station may determine a codebook parameter required to be adopted for communicating with the terminal, according to a sounding reference signal resource reported by the terminal, and notify the determined codebook parameter to the terminal. Then, the terminal determines a corresponding codebook according to the codebook parameter notified by the base station.

Currently, a discrete fourier transform (Discrete Fourier Transform, DFT) codebook is usually designed based on a far-field channel, and it does not consider an impact of the increasing in the number of antenna array elements on a channel model. Based on this codebook, deterioration of near-field transmission performance will be caused, channel estimation quality and system capacity will be affected, and a communication requirement cannot be satisfied. Therefore, the codebook is usually insufficient to support the near-field communication requirement.

In view of this, the present disclosure provides a channel information feedback method, and the method includes: acquiring channel information; determining, according to the channel information, a target codeword from a codebook set, where the codebook set includes a plurality of codewords, and each of the codewords consists of one or more codeword blocks; and transmitting a feedback message, where the feedback message includes an indication parameter of the target codeword. The codebook in the codebook set mentioned above adopts an idea of a multi-domain codebook design, to satisfy requirements of precoding performance and communication quality in different scenarios. Also, indication parameters used to indicate codewords adopted for precoding are not independent from each other, and there is a correlation between different indication parameters, so that a number of indication parameters fed back may be reduced, to alleviate a transmission burden.

Implementations for the embodiments of the present disclosure are described in detail below in conjunction with the drawings.

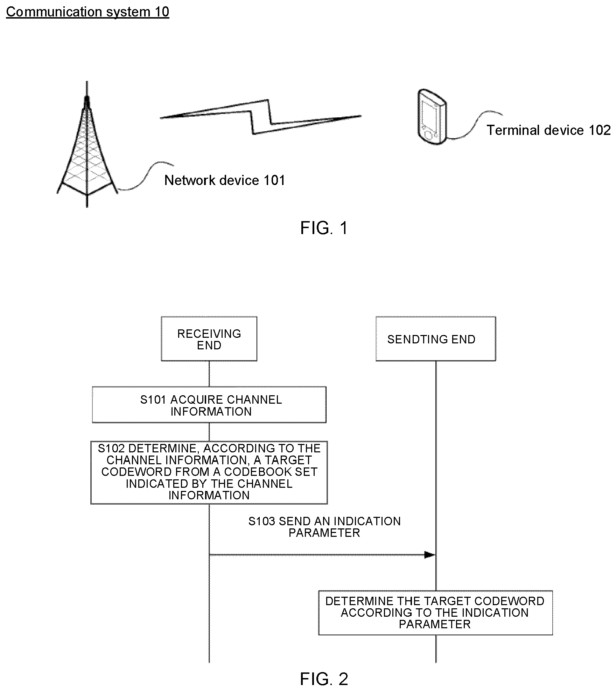

The method provided in the embodiments of the present disclosure may be applied to various communication systems. For example, the communication system may be a long term evolution (LTE) system, a 5th generation (5G) communication system, a Wi-Fi system, a 3rd generation partnership project (3GPP)-related communication system, a future evolved communication system (e.g., a 6th generation (6G) communication system, etc.), or a system integrating multiple systems, etc., which is not limited thereto. The following takes a communication system 10 shown in FIG. 1 as an example, to describe the method provided in the embodiments of the present disclosure. FIG. 1 is merely a schematic diagram and does not constitute a limitation on the applicable scenarios of the technical solutions provided in the present disclosure.

As shown in FIG. 1, FIG. 1 is a schematic diagram of an architecture of a communication system 10 provided in the embodiments of the present disclosure. In FIG. 1, the communication system 10 may include a network device 101 and a terminal device 102 that communicates with the network device 101.

In FIG. 1, the network device 101 may provide a radio access service for the terminal(s). Specifically, a network device provides a service coverage area (also referred to as a cell). A terminal device entering this area may communicate with the base station by a radio signal, to receive a radio access service provided by the base station. In addition, the service coverage area of the network device may also be classified into a near field and a far field. The terminal device may be located in a range of the near field or may also be located in a range of the far field.

In some embodiments, the network device 101 in the embodiments of the present disclosure may be any one type of device with a radio transceiving function. For example, the network device 101 may be a base station (evolution nodeB, eNB), a next generation base station (generation nodeB, gNB), a receiving and transmitting point (transmission receive point, TRP), a transmission point (TP), and a certain type of other access node. According to a size of the provided service coverage area, the base station may be classified into a macro base station for providing a macro cell (Macro cell), a micro base station for providing a pico cell (Pico cell) and a femto base station for providing a femto cell (Femto cell). With the continuous evolution of wireless communication technologies, other names for future base stations may be also adopted.

In some embodiments, the terminal device 102 in the embodiments of the present disclosure may be any type of device with a radio transceiving function. For example, the terminal device is a handheld device with a radio communication function (e.g., a mobile phone or a tablet computer), a vehicle-mounted device, a wearable device, a terminal device or a computing device in an internet of things (IoT) system, etc. The terminal device may also be referred to as a terminal or a user equipment (UE), which is not limited thereto.

The communication system 10 shown in FIG. 1 is only used as an example and is not used to limit the technical solutions of the present disclosure. Those skilled in the art should understand that, in the specific implementation process, the communication system 10 may further include other devices, and meanwhile, the number of network devices and the number of terminal devices may also be determined according to specific needs, which is not limited thereto.

FIG. 2 is a schematic flowchart of a channel information feedback method provided in the embodiments of the present disclosure. Exemplarily, the channel information feedback method provided in the present disclosure may be applied to the application environment shown in FIG. 1.

As shown in FIG. 2, the channel information feedback method provided in the present disclosure may include specifically the following contents.

S101, a receiving end acquires channel information.

The receiving end mentioned above may be the network device 101 or the terminal device 102 in the communication system 10 shown in FIG. 1. In a communication process, if the network device 101 transmits data to the terminal device 102 and the terminal device 102 receives the data sent by the network device 101, the terminal device 102 may be referred to as a receiving end. Accordingly, the network device 101 is a transmitting end.

In some embodiments, the receiving end may perform channel measurement to acquire the channel information. Exemplarily, the transmitting end may transmit a pilot signal to the receiving end, for example, the pilot signal is a channel state information-reference signal (CSI-RS). Based on the pilot signal, the receiving end may perform the channel measurement at a resource position of the receiving end located relative to the transmitting end, to acquire the channel information. The specific process for the channel measurement may refer to the related art, which will be not repeated in detail in the embodiments of the present disclosure.

In some embodiments, the channel information mentioned above may be in a form of a matrix/vector.

S102, the receiving end determines, according to the channel information, a target codeword from a codebook set indicated by the channel information.

The codebook set includes a plurality of codewords, and each of the codewords consists of one or more codeword blocks. Also, each of the codewords is in a form of a matrix/vector, and the target codeword is used to characterize the channel information of the communication process.

It should be noted that, in the communication process, the receiving end and the transmitting end may pre-agree on a same codebook set, or may have a same codeword generation model to generate the codebook set. After acquiring the channel information, the receiving end may determine the target codeword from a pre-agreed codeword set based on the channel information.

In some embodiments, each of the codewords consists of one or more codeword blocks, and each of the codewords is in a form of a matrix/vector, and then, a codeword block may also be in a form of a matrix/vector.

Exemplarily, it is assumed that the codeword form of a codeword W may be represented by the following Formula (1):

$$W = \begin{bmatrix} \alpha_1 G_1 & \alpha_2 G_2 \\ \alpha_3 G_3 & \alpha_4 G_4 \end{bmatrix} \qquad \text{Formula (1)}$$

where $\alpha_1$, $\alpha_2$, $\alpha_3$, and $\alpha_4$ each are preset constants. W is the codeword mentioned above, and is a matrix with $N_t$ rows and r columns, $N_t$ is an integer greater than or equal to 2, and r is an integer greater than or equal to 1; $G_1$ is a first codeword block in the codeword, $G_2$ is a second codeword block in the codeword, $G_3$ is a third **codeword** block in the codeword, and $G_4$ is a fourth codeword block in the codeword.

In some embodiments, at least one codeword element of at least one codeword in the codeword set is determined according to a high-order polynomial of an antenna index.

The polynomial is an algebraic expression consisting of the adding of several monomials. Each of the monomials includes a variable and/or a coefficient, and the order of the monomial is determined by an order of the variable in the monomial. An order of the polynomial is determined by a highest order of monomials in the polynomial. For example, the polynomial includes a linear monomial and a quadratic monomial, and then, the polynomial is a quadratic polynomial. In addition, the high-order polynomial refers to a polynomial with an order greater than 1, such as a quadratic polynomial or a cubic polynomial.

Exemplarily, a codeword block $G$ may be $G=[G_{n_1} \ G_{n_2} \ \cdots \ G_{n_N}]$, where $G_{n_1}$, $G_{n_2}$ ...... $G_{n_N}$ each are codeword elements in the codeword block $G$, that is, $G_{n_1}$, $G_{n_2}$ ...... $G_{n_N}$ may be determined according to the high-order polynomial of the antenna index.

In some possible embodiments, the codeword element satisfies any one of the following Formula (3), Formula (4) or Formula (5):

$$G_n = p_n \exp\left( j2\pi \left( a_0 + an + bn^2 \right) \right) \qquad \text{Formula (3)}$$

it should be understood that the codeword element in Formula (3) is determined according to a quadratic polynomial of n;

$$G_n = p_n \exp\left( j2\pi \left( a_0 + an + bn^2 + cn^3 \right) \right) \qquad \text{Formula (4)}$$

it should be understood that the codeword element in Formula (4) is determined according to a cubic polynomial of $n$; and

$$G_n = p_n \exp\left( j2\pi \left( a_0 + an + bn^2 + cn^3 + en^4 \right) \right)$$

Formula (5)

it should be understood that the codeword element in Formula (5) is determined according to a quartic polynomial of $n$. Also, in addition to the examples mentioned above, the high-order polynomial may also be in other possible forms, such as a higher-order polynomial, etc.

In Formula (3) to Formula (5) mentioned above, $G_n$ is a codeword element in the codeword block, $n$ is an antenna index, $a$ is a first precoding indication parameter, $b$ is a second precoding indication parameter, $c$ is a third precoding indication parameter, e is a fourth precoding indication parameter, $a_0$ is a phase parameter of a transmitted signal under the channel information, and $p_n$ is an amplitude of the element $G_n$ in the codeword block.

In some embodiments, the indication parameter of the target codeword mentioned above includes a first parameter and a second parameter, and the first parameter and the second parameter are used to indicate coefficients of respective monomials in the high-order polynomial.

Exemplarily, the first parameter and the second parameter may be used to indicate $a, b, c$, and e in Formula (3) to Formula (5) mentioned above.

In some embodiments, $a, b, c$, and e may also be implemented in forms of functions related to the first parameter and the second parameter.

Exemplarily, $a$ may be implemented as a function $f_1(t_1, t_2)$, $b$ may be implemented as a function $f_2(t_1, t_2)$, c may be implemented as a function $f_3(t_1, t_2)$, and e may be implemented as a function $f_4(t_1, t_2)$. That is, the Formula (3) mentioned above may be implemented as $G_{t_1, t_2, n} = p_n \exp(j2\pi(f_2(t_1, t_2)n^2 + f_1(t_1, t_2)n + a_0))$, the Formula (4) mentioned above may be implemented as $G_{t_1, t_2, n} = p_n \exp(j2\pi(f_3(t_1, t_2)n^3 + f_2(t_1, t_2)n^2 + f_1(t_1, t_2)n + a_0))$, and the Formula (5) mentioned above may be implemented as $G_{t_1, t_2, n} = p_n \exp(j2\pi(f_4(t_1, t_2)n^4 + f_3(t_1, t_2)n^3 + f_2(t_1, t_2)n^2 + f_1(t_1, t_2)n + a_0))$.

In some embodiments, the indication parameter of the target codeword further includes a third parameter, and the third parameter is used to indicate a highest power of the high-order polynomial.

In a possible implementation, the first precoding indication parameter is determined based on the first parameter; if the third parameter is within a first preset range, the highest power of the high-order polynomial is 2, and the second precoding indication parameter is determined based on the first parameter and the second parameter, or the second precoding indication parameter is determined based on the second parameter; if the third parameter is within a second preset range, the highest power of the high-order polynomial is 3, and the third precoding indication parameter is determined based on the first parameter and the second parameter; and if the third parameter is within a third preset range, the highest power of the high-order polynomial is 4, and the fourth precoding indication parameter is determined based on the first parameter and the second parameter.

If $a, b$, c and $e$ may be implemented as a function $f_{k'}(t_1, t_2)$. It is preset that $k' \leq k$, $k' \geq 1$, $k' \leq 4$, $f_{k'}(t_1, t_2)$ at least contains an expression with an order not less than 1 related to $t_1$ and $t_2$.

In some embodiments, the first preset range mentioned above may be that a first indication parameter $k$ satisfies $1 \leq k < 2$; and the second preset range may be that the third parameter $k$ satisfies $2 < k \leq 3$; and the third preset range may be that the third parameter $k > 3$.

In an example, if the third parameter $k=2$, $f_3(t_1, t_2) = 0$, $f_4(t_1, t_2) = 0$, so that the high-order polynomial of the antenna index is a quadratic polynomial of the antenna index n shown in the Formula (3) mentioned above.

In another example, if the third parameter $k=3$, $f_4(t_1, t_2) = 0$, so that the high-order polynomial of the antenna index may be a cubic polynomial of the antenna index n shown in the Formula (4) mentioned above.

In yet another example, if the third parameter k=4, the high-order polynomial of the antenna index may include a quartic polynomial of the antenna index n shown in the Formula (5) mentioned above.

In some embodiments, a value of the first parameter is determined based on a first target function related to a phase parameter of a transmitted signal under the channel information.

In some embodiments, the first target function is a sine function or a cosine function.

Exemplarily, the first target function related to the phase parameter $\theta$, may be implemented as any one of: $t_1 = \theta$, $t_1$ =sin$\theta$, $t_1$ =cos$\theta$, $t_1$ =tan$\theta$, $t_1 = \dfrac{1}{\sin\theta}$, $t_1 = \dfrac{1}{\cos\theta}$ or $t_1 = \dfrac{1}{\tan\theta}$.

$t_1$ is the first parameter.

In addition to the implementations listed above, the first target function may also satisfy linear transformations, multiplication and division changes or trigonometric functions, logarithmic functions, exponential functions, power functions, inverse transformations, etc., of the above functions, which are not listed one by one here.

In some embodiments, a value of the second parameter is determined based on a second target function related to a phase parameter of a transmitted signal under the channel information, and the second target function is a quadratic sine-type function or a quadratic cosine-type function.

In addition, the second target function for determining the second parameter $t_2$ based on the phase parameter $\theta$ may be any one of: $t_2 = \theta$, $t_2 = \theta^2$, $t_2 = \sin^2\theta$, $t_2 = \cos^2\theta$, $t_2 = \tan^2\theta$, $t_2 = \dfrac{1}{\sin^2\theta}$, $t_2 = \dfrac{1}{\cos^2\theta}$ or $t_2 = \dfrac{1}{\tan^2\theta}$ .

In some embodiments, the second parameter $t_2$ may also be determined based on the phase parameter $\theta$ and a distance r from the receiving end to the transmitting end. The second target function may be $t_2 = \dfrac{\cos^2\theta}{r}$ or $t_2 = \dfrac{\sin^2\theta}{r}$ .

In some embodiments, the second parameter $t_2$ may also be determined based on the phase parameter $\theta$, the distance $r$ from the receiving end to the transmitting end, and a wavelength parameter $\lambda$. The second target function may be: $t_2 = \dfrac{\lambda\sin^2\theta}{r}$ , $t_2 = \dfrac{\lambda\cos^2\theta}{r}$ , $t_2 = \dfrac{\sin^2\theta}{\lambda r}$ , $t_2 = \dfrac{\cos^2\theta}{\lambda r}$ , $t_2 = \dfrac{\tan^2\theta}{r}$ , $t_2 = \dfrac{r}{\sin^2\theta}$ , $t_2 = \dfrac{r}{\cos^2\theta}$ , $t_2 = \dfrac{r}{\tan^2\theta}$ , $t_2 = \dfrac{r}{\lambda\sin^2\theta}$ , $t_2 = \dfrac{r}{\lambda\cos^2\theta}$ , $t_2 = \dfrac{r}{\lambda\tan^2\theta}$ , $t_2 = \dfrac{\lambda r}{\sin^2\theta}$ , $t_2 = \dfrac{\lambda r}{\cos^2\theta}$ , or $t_2 = \dfrac{\lambda r}{\tan^2\theta}$ .

In addition to the implementations listed above, the second target function may also satisfy linear deformations, multiplication and division changes or trigonometric functions, logarithmic functions, exponential functions, power functions, inverse deformations, etc., of the above functions, which are not listed one by one here.

In some embodiments, a value set of the second parameter is determined based on a value of the first parameter, or a value set of the first parameter is determined based on a value of the second parameter.

The following embodiments show a correlation between the value of the first parameter and the value of the second parameter.

Embodiment 1: a sum of all values in the value set of the second parameter is positively correlated with the value of the first parameter.

In a possible implementation, it is set that $t_1 = -\dfrac{\sin\theta}{2P}, t_2 = \dfrac{8r}{Q\lambda\cos^2\theta}$ , where $\lambda$ is a wavelength parameter, $r$ is a distance from the receiving end to the transmitting end, and $\theta$ is a transmission angle between the receiving end and the transmitting end. Also, P is the first preset parameter related to the value of the first parameter and the value of the second parameter, and $Q$ is the second preset parameter related to the value of the first parameter and the value of the second parameter.

Furthermore, based on the parameters mentioned above, it may be concluded that the relationship between the first parameter and the second parameter may be expressed as the following Formula (6):

$$t_2 = \frac{1}{Q\lambda}\frac{8r}{1 - 4P^2 t_1^2} \qquad\qquad \text{Formula (6)}$$

and therefore, a value range of the second parameter may be $t_2 \in \left\{\dfrac{x_1}{Q}, \dfrac{x_2}{Q}, \cdots, \dfrac{x_n}{Q}\right\} * \dfrac{8}{\lambda\left(1 - 4P^2 t_1^2\right)}$ , where $x_1, x_2, \cdots, x_n$ are n constant values.

It can be seen that the value range of the second parameter $t_2$ may be determined based on the value of the first parameter. Also, the sum of all values in the value set of the second parameter is positively correlated with the value of the first parameter.

In some embodiments, the codeword element may satisfy any one of the following Formula (7), Formula (8), Formula (9) or Formula (10):

$$G_{t_1,t_2,n} = p_n \exp\left( j2\pi\left( Qt_2 n^2 + Pt_1 n\right)\right) \qquad\qquad \text{Formula (7)}$$

$$G_{t_1,t_2,n} = p_n \exp\left( j2\pi\left( \frac{Qt_2}{1 - 4P^2 t_1^2} n^2 + Pn t_1\right)\right) \qquad\qquad \text{Formula (8)}$$

$$G_{t_1,t_2,n} = p_n \exp\left( j2\pi\left( \frac{8PQ^2 t_1 t_2^2}{1-4P^2 t_1^2} n^3 + Qt_2 n^2 + Pt_1 n \right) \right) \qquad \text{Formula (9)}$$

$$G_{t_1,t_2,n} = p_n \exp\left( j2\pi\left( \frac{4\left(20P^2 t_1^2 - 1\right)Q^3 t_2^3}{\left(1-4P^2 t_1^2\right)^2} n^4 + \frac{8PQ^2 t_1 t_2^2}{1-4P^2 t_1^2} n^3 + Qt_2 n^2 + Pt_1 n \right) \right) \qquad \text{Formula (10)}$$

where $G_{t_1,t_2,n}$ is a codeword element in the codeword block, $n$ is the antenna index, $t_1$ is the first parameter, $t_2$ is the second parameter, $P$ is the first preset parameter, $Q$ is the second preset parameter, and $p_n$ is an amplitude of the element $G_{t_1,t_2,n}$ in the codeword block.

In another possible implementation, it is set that $t_1 = -\frac{\sin\theta}{P}, t_2 = \frac{2r}{Q\cos^2\theta}$ , where r is a distance from the receiving end to the transmitting end, and $\theta$ is a transmission angle between the receiving end and the transmitting end. Also, $P$ is the first preset parameter related to the value of the first parameter and the value of the second parameter, and $Q$ is the second preset parameter related to the value of the first parameter and the value of the second parameter.

Furthermore, based on the parameters mentioned above, it may be concluded that the relationship between the first parameter and the second parameter may be expressed as the following Formula (11):

$$t_2 = \frac{2r}{Q\left(1-P^2 t_1^2\right)} \qquad \text{Formula (11)}$$

and therefore, a value range of the second parameter $t_2$ may be $t_2 \in \left\{ \frac{x_1}{Q}, \frac{x_2}{Q}, \cdots, \frac{x_n}{Q} \right\} * \frac{1}{2\left(1-P^2 t_1^2\right)}$ , where $x_1, x_2, \cdots, x_n$ are n constant values.

It can be seen that the value range of the second parameter may be determined based on the value of the first parameter. Also, the sum of all values in the value set of the second parameter is positively correlated with the value of the first parameter.

In some embodiments, the codeword element may satisfy any one of the following Formula (12), Formula (13), Formula (14), or Formula (15):

$$G_{t_1,t_2,n} = p_n \exp\left( j\frac{2\pi}{\lambda}\left( \frac{1}{Qt_2} n^2 d^2 + Pt_1 nd \right) \right) \qquad \text{Formula (12)}$$

$$G_{t_1,t_2,n} = p_n \exp\left( j\frac{2\pi}{\lambda}\left( \frac{1}{\left(1-P^2 t_1^2\right)Qt_2} n^2 d^2 + Pt_1 nd \right) \right) \qquad \text{Formula (13)}$$

$$G_{t_1,t_2,n} = p_n \exp\left( j\frac{2\pi}{\lambda}\left( \frac{2Pt_1}{\left(1-P^2 t_1^2\right)Q^2 t_2^2} n^3 d^3 + \frac{1}{Qt_2} n^2 d^2 + Pt_1 nd \right) \right) \qquad \text{Formula (14)}$$

$$G_{t_1,t_2,n} = p_n \exp\left( j\frac{2\pi}{\lambda}\left( \frac{\left(5P^2 t_1^2 - 1\right)}{\left(1-P^2 t_1^2\right)^2 Q^3 t_2^3} n^4 d^4 + \frac{2Pt_1}{\left(1-P^2 t_1^2\right)Q^2 t_2^2} n^3 d^3 + \frac{1}{Qt_2} n^2 d^2 + Pt_1 nd \right) \right) \text{Formula (15)}$$

where $G_{t_1,t_2,n}$ is a codeword element in the codeword block, $n$ is the antenna index, $t_1$ is the first parameter, $t_2$ is the second parameter, $P$ is the first preset parameter, $Q$ is the second preset parameter, and $p_n$ is an amplitude of the element $G_{t_1,t_2,n}$ in the codeword block.

Embodiment 2: a sum of all values in the value set of the second parameter is negatively correlated with the value of the first parameter.

In a possible implementation, it is set that $t_1 = -\dfrac{\sin\theta}{P}, t_2 = \dfrac{\cos^2\theta}{2Qr}$ , where $\lambda$ is a wavelength parameter, $r$ is a distance from the receiving end to the transmitting end, and $\theta$ is a transmission angle between the receiving end and the transmitting end. Also, $P$ is the first preset parameter related to the value of the first parameter and the value of the second parameter, and $Q$ is the second preset parameter related to the value of the first parameter and the value of the second parameter.

Furthermore, based on the parameters mentioned above, it may be concluded that the relationship between the first parameter and the second parameter may be expressed as the following Formula (16):

$$t_2 = \frac{1 - P^2 t_1^2}{2Qr} \qquad \text{Formula (16)}$$

and therefore, the value range of the second parameter $t_2$ may be $t_2 \in \left\{\dfrac{x_1}{Q}, \dfrac{x_2}{Q}, \cdots, \dfrac{x_n}{Q}\right\} * \dfrac{\left(1 - P^2 t_1^2\right)}{2}$, where $x_1, x_2, \cdots, x_n$ are n constant values.

It can be seen that a value range of the second parameter $t_2$ may be determined based on the value of the first parameter. Also, the sum of all values in the value set of the second parameter is negatively correlated with the value of the first parameter.

In some embodiments, the codeword element may satisfy any one of the following Formula (17), Formula (18), Formula (19), or Formula (20):

$$G_{t_1,t_2,n} = p_n \exp\left( j\frac{2\pi}{\lambda}\left(Qt_2 n^2 d^2 + Pt_1 nd\right)\right) \qquad \text{Formula (17)}$$

$$G_{t_1,t_2,n} = p_n \exp\left( j\frac{2\pi}{\lambda}\left(\frac{Qt_2}{1 - P^2 t_1^2} n^2 d^2 + Pt_1 nd\right)\right) \qquad \text{Formula (18)}$$

$$G_{t_1,t_2,n} = p_n \exp\left( j\frac{2\pi}{\lambda}\left(\frac{2PQ^2 t_1 t_2^2}{1 - P^2 t_1^2} n^3 d^3 + Qt_2 n^2 d^2 + Pt_1 nd\right)\right) \qquad \text{Formula (19)}$$

$$G_{t_1,t_2,n} = p_n \exp\left( j\frac{2\pi}{\lambda}\left(\frac{Q^3 t_2^3 \left(5P^2 t_1^2 - 1\right)}{\left(1 - P^2 t_1^2\right)^2} n^4 d^4 + \frac{2PQ^2 t_1 t_2^2}{1 - P^2 t_1^2} n^3 d^3 + Qt_2 n^2 d^2 + Pt_1 nd\right)\right) \text{Formula (20)}$$

where $G_{t_1,t_2,n}$ is a codeword element in the codeword block, $n$ is the antenna index, $t_1$ is the first parameter, $t_2$ is the second parameter, $P$ is the first preset parameter, $Q$ is the second preset parameter, $p_n$ is an amplitude of the element $G_{t_1,t_2,n}$ in the codeword block, $d$ is an array unit spacing, and $\lambda$ is a wavelength parameter.

Embodiment 3: a sum of all values in the value set of the second parameter is related to the value of the first parameter.

In a possible implementation, it is set that $t_1 = \operatorname{atan}\left(\dfrac{\lambda r}{2P\pi \cos^2\theta}\right), t_2 = \dfrac{2\pi}{\lambda Q}\sin t_1 \sin\theta$ , where $\lambda$ is a wavelength parameter, r is a distance from the receiving end to the transmitting end, and $\theta$ is a transmission angle between the receiving end and the transmitting end. Also, $P$ is the first preset parameter related to the value of the first parameter and the value of the second parameter, and $Q$ is the second preset parameter related to the value of the first parameter and the value of the second parameter.

Furthermore, based on the parameters mentioned above, it may be concluded that the relationship between the first parameter and the second parameter may be expressed as the following Formula (21):

$$t_2 = \frac{2\pi}{\lambda Q} \sin t_1 \sin \theta \qquad\qquad \text{Formula (21)}$$

and therefore, a value range of the second parameter $t_2$ may be $t_2 \in \{x_1, x_2, \cdots, x_n\} * \frac{2\pi}{\lambda Q} \sin t_1 - \frac{2\pi}{\lambda Q} \sin t_1$, where $x_1$, $x_2$, $\cdots$, $x_n$ are n constant values.

It can be seen that the value range of the second parameter $t_2$ may be determined based on the value of the first parameter.

In some embodiments, the codeword element may satisfy the following Formula (22):

$$G_{t_1,t_2,n} = p_n \exp\left( j\left( \frac{n^2}{2P \tan t_1} - \frac{Qt_2 n}{\sin t_1} \right) \right) \qquad\qquad \text{Formula (22)}$$

where $G_{t_1,t_2,n}$ is a codeword element in the codeword block, $n$ is the antenna index, $t_1$ is the first parameter, $t_2$ is the second parameter, $P$ is the first preset parameter, $Q$ is the second preset parameter, and $p_n$ is an amplitude of the element $G_{t_1,t_2,n}$ in the codeword block.

In some embodiments, a number of all values in the value set of the second parameter is also determined according to the value of the first parameter.

Exemplarily, it is set that $t_1 = -\dfrac{\sin\theta}{2P}, t_2 = \dfrac{\lambda \cos^2\theta}{8rQ}$, where $\lambda$ is a wavelength parameter, $r$ is a distance from the receiving end to the transmitting end, and $\theta$ is a transmission angle between the receiving end and the transmitting end. Also, $P$ is the first preset parameter related to the value of the first parameter and the value of the second parameter, and $Q$ is the second preset parameter related to the value of the first parameter and the value of the second parameter.

Furthermore, a value range C of the second parameter $t_2$ may satisfy the following relationship:

$$C = \left\{ \frac{0L}{N_2 Q}, \frac{L}{N_2 Q}, \cdots, \frac{uL}{N_2 Q} \right\}, \text{ where } \frac{uL}{N_2 Q} > \frac{(N_2 - 1)L}{N_2 Q} \frac{\lambda(1 - 4P^2 t_1^2)}{8} \text{ and } \frac{(u-1)L}{N_2 Q} \leq \frac{(N_2 - 1)L}{N_2 Q} \frac{\lambda(1 - 4P^2 t_1^2)}{8}$$

where $N_2$ is a number of division grid points of the second parameter, and a value of $N_2$ may be determined based on a manner in which the transmitting end transmits a parameter. $L$ is a preset parameter of the transmitting end; $\lambda$ is a wavelength parameter; $t_1$ is the first parameter; $P$ is the first preset parameter related to the value of the first parameter and the value of the second parameter, and $Q$ is the second preset parameter related to the value of the first parameter and the value of the second parameter. $t_2 \in \{x_1, x_2, \cdots, x_n\} * \frac{2\pi}{\lambda Q} \sin t_1 - \frac{2\pi}{\lambda Q} \sin t_1$, where $x_1$, $x_2$, $\cdots$, $x_n$ are n constant values.

In some embodiments, after the element in the codeword block is determined based on the various possible implementations mentioned above, at least one codeword block required may also be generated based on a preset codeword block generation model.

In some embodiments, the at least one codeword block obtained based on the codeword block generation model satisfies the relationship shown in the following Formula (23):

$$G = \left( G_{t_1,t_2} \right) \otimes \left( G'_{t'_1,t'_2} \right) \qquad\qquad \text{Formula (23)}$$

Exemplarily, G is the codeword block in the codeword, $G_{t_1,t_2,n}$ is a first codeword block, and $G'_{t'_1,t'_2}$ is a second codeword block.

The first codeword block $G_{t_1,t_2}$ may be expressed as: $G_{t_1,t_2}$ which is $G_{t_1,t_2} = \left[ G_{t_1,t_2,n_1} \quad G_{t_1,t_2,n_2} \quad \cdots \quad G_{t_1,t_2,n_{N_1}} \right]$, and $G'_{t'_1,t'_2}$ is $G'_{t'_1,t'_2} = \left[ G_{t'_1,t'_2,n'_1} \quad G_{t'_1,t'_2,n'_2} \quad \cdots \quad G_{t'_1,t'_2,n'_{N_1}} \right]$.

$N_1$ and $N'_1$ each are numbers of elements, $\otimes$ represents a Kronecker product operation,

$G_{t_1,t_2} \in C^{N_1 \times 1}, G_{t'_1,t'_2} \in C^{N'_1 \times 1}$, $t_1$ is the first parameter of the first codeword block $G_{t_1,t_2}$, $t_2$ is the second parameter of the first codeword block $G_{t_1,t_2}$; $t'_1$ is the first parameter of the second codeword block $G_{t'_1,t'_2}$, and $t'_2$ is the second parameter of the second codeword block $G_{t'_1,t'_2}$.

In some embodiments, $t_1$, $t_2$, $t'_1$, and $t'_2$ mentioned above may be determined based on a horizontal angle $\theta$, a pitch angle $\varphi$ and a distance r between the receiving end and the transmitting end.

Exemplarily, $t_1$, $t_2$, $t'_1$, and $t'_2$ satisfy any one of the following relationships:

$$t_1 = P\sin\theta\cos\varphi, t_2 = \frac{1-\sin^2\theta\cos^2\varphi}{2Qr}, t'_1 = P\sin\theta\sin\varphi, t'_2 = \frac{1-\sin^2\theta\sin^2\varphi}{2Qr},$$

or

$$t_1 = \frac{\sin\theta\cos\varphi}{2P}, t_2 = \frac{\lambda(1-\sin^2\theta\cos^2\varphi)}{8Qr}, t'_1 = \frac{\sin\theta\sin\varphi}{2P}, t'_2 = \frac{\lambda(1-\sin^2\theta\sin^2\varphi)}{8Qr},$$

or

$$t_1 = P\sin\theta\cos\varphi, t_2 = \frac{1}{2Qr}, t'_1 = P\sin\theta\sin\varphi, t'_2 = \frac{1}{2Qr},$$

or

$$t_1 = \frac{\sin\theta\cos\varphi}{2P}, t_2 = \frac{\lambda}{Qr}, t'_1 = \frac{\sin\theta\sin\varphi}{2P}, t'_2 = \frac{\lambda}{Qr},$$

or

$$t_1 = P\sin\theta\cos\varphi, t_2 = \frac{r}{2Q}, t'_1 = P\sin\theta\sin\varphi, t'_2 = \frac{r}{2Q},$$

or

$$t_1 = \frac{\sin\theta\cos\varphi}{2P}, t_2 = \frac{r}{\lambda Q}, t'_1 = \frac{\sin\theta\sin\varphi}{2P}, t'_2 = \frac{r}{\lambda Q}.$$

In addition, in addition to the relationships listed mentioned above, $t_1$, $t_2$, $t'_1$, and $t'_2$ may also satisfy linear transformations, multiplication and division changes or trigonometric functions, logarithmic functions, exponential functions, power functions, inverse transformations, etc., of the above functions, which are not listed one by one here.

In some embodiments, a value of $t_1$ is determined based on a value of $t_2$, a value of $t'_1$, and a value of $t'_2$; and/or, a value of $t_2$ is determined based on a value of $t_1$, a value of $t'_1$, and a value of $t'_2$; and/or, a value of $t'_1$ is determined based on a value of $t_1$, a value of $t_2$, and a value of $t'_2$; and/or, a value of $t'_2$ is determined based on a value of $t_1$, a value of $t_2$, and a value of $t'_1$.

Exemplarily, if $t_1$, $t_2$, $t_1'$, and $t_2'$ satisfy the following relationship:

$$t_1 = \sin\theta\cos\varphi, t_2 = \frac{1-\sin^2\theta\cos^2\varphi}{2r}, t_1' = \sin\theta\sin\varphi, t_2' = \frac{1-\sin^2\theta\sin^2\varphi}{2r}$$

, the value of $t_2'$ may be expressed as

$$t_2' = \frac{\left(1-t_1'^2\right)t_2}{1-t_1^2}.$$

Of course, the value of $t_1$ may also be expressed by adopting $t_2$, $t_1'$, and $t_2'$, the value of $t_2$ may also be expressed by adopting $t_1$, $t_1'$ and $t_2'$, and the value of $t_1'$ may also be expressed by adopting $t_2$, $t_1$ and $t_2'$, which are not listed one by one here.

In some embodiments, values of $t_1$, $t_2$, $t_1'$, and $t_2'$ are determined based on three preset feedback parameters $s_1$, $s_2$, and $s_3$ independent from each other.

Exemplarily, the preset feedback parameters $s_1$, $s_2$, and $s_3$ may be a horizontal angle $\theta$, a pitch angle $\varphi$, and a distance r between the receiving end and the transmitting end, or may be determined by other possible parameters.

S103, the receiving end transmits an indication parameter of the target codeword to the transmitting end.

Accordingly, the transmitting end may determine the target codeword according to indication information of the receiving end.

The indication information may be an index of the target codeword; or, the indication information may also be a generation parameter for the codeword, such as the first parameter, the second parameter, and the third parameter in the aforementioned S102. The embodiments of the present disclosure do not impose any limitation on this specific implementation, as long as the indication information can indicate the target codeword characterizing the channel information in the codeword set, so that the transmitting end may accurately acquire the channel information of the receiving end according to the target codeword, for precoding.

Based on the channel information feedback method provided in the embodiments of the present disclosure, in the embodiments of the present disclosure, indication parameters used to indicate codewords used for precoding are not independent from each other, and there is a correlation between different indication parameters, so that the convenience and accuracy of channel information feedback may be enhanced. Also, a number of indication parameters fed back may be reduced, to alleviate a transmission burden.

It can be understood that in order to achieve the functions mentioned above, a communication apparatus contains corresponding hardware structures and/or software modules for performing respective functions. Those skilled in the art should easily realize that, in combination with the exemplary algorithm steps described in the embodiments of the present disclosure, the present disclosure can be implemented in the form of hardware or a combination of hardware and computer software. Whether a certain function is performed via the hardware or the computer software-driven hardware depends on the specific application and restrictive conditions on design of the technical solutions. Professional technicians may use different methods to implement the described functions for each specific application, but such implementation should not be considered beyond the scope of the present disclosure.

In the embodiments of the present disclosure, the communication apparatus may be divided into functional modules according to the foregoing method embodiments, for example, may be divided in a way that each functional module corresponds to each function, or two or more functions are integrated into one functional module. The integrated module may be implemented in the form of hardware, or may be implemented in the form of software. It should be noted that the division of the modules in embodiments of the present disclosure is schematic, which is only a logical functional division, and there may be other divisions for in actual implementations. The following is an example of dividing each functional module corresponding to each function.

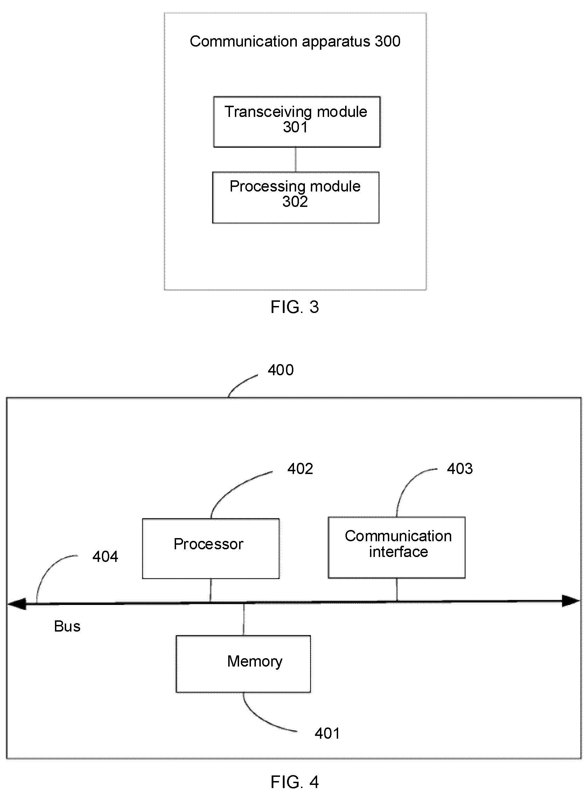

FIG. 3 is a structural schematic diagram of a communication provided in the embodiments of the present disclosure. The access node may perform the precoding method provided in the method embodiments mentioned above. As shown in FIG. 3, the communication apparatus 300 includes a transceiving module 301 and a processing module 302.

In some embodiments, the transceiving module 301 is configured to acquire channel information.

The processing module 302 is configured to determine a target codeword from a codebook set according to the channel information. The codebook set includes a plurality of codewords, and each of the codewords consists of one or more codeword blocks.

The transceiving module 301 is further configured to transmit an indication parameter of the target codeword.

In a case of implementing the functions of the integrated module mentioned above in the form of hardware, the embodiments of the present disclosure provide a structural schematic diagram of a communication apparatus. As shown in FIG. 4, the communication apparatus 400 includes a processor 402 and a bus 404. Optionally, the communication apparatus 400 may further include a memory 401. Optionally, the communication apparatus 400 may further include a communication interface 403.

The processor 402 may implement or execute various illustrative logical blocks, modules and circuits described in conjunction with the embodiments of the present disclosure. The processor 402 may be a central processing unit, a general-purpose processor, a digital signal processor, an application specific integrated circuit, a field programmable gate array or any other programmable logic device, a transistor logic device, a hardware component, or any combination thereof. It may implement or execute various illustrative logical blocks, modules and circuits described in conjunction with the embodiments of the present disclosure. The processor 402 may also be a combination capable of implementing computing functions, for example, including a combination of one or more microprocessors, or a combination of a digital signal processor (DSP) and a microprocessor.

The communication interface 403 is configured to connect with other devices through a communication network. The communication network may be an Ethernet, a radio access network, a wireless local area network (WLAN), or the like.

The memory 401 may be, but is not limited to, a read-only memory (ROM) or any other type of static storage device capable of storing static information and instructions, a random access memory (RAM) or any other type of dynamic storage device capable of storing information and instructions, or an electrically erasable programmable read-only memory (EEPROM), a magnetic disk storage medium or any other magnetic storage device, or any other medium capable of being used to carry or store desired program codes and capable of being accessed by a computer, where the desired program codes have instructions or are in the form of data structure.

As a possible implementation, the memory 401 may exist independently of the processor 402, and the memory 401 may be connected to the processor 402 through the bus 404, for storing instructions or program codes. When calling and executing the instructions or the program codes stored in the memory 401, the processor 402 is capable of realizing the method provided by the embodiments of the present disclosure.

In another possible implementation, the memory 401 may also be integrated with the processor 402.

The bus 404 may be an extended industry standard architecture (EISA) bus or the like. The bus 404 may be classified into an address bus, a data bus, and a control bus, or the like. For the convenience of representation, only one thick line is used in FIG. 4 for representation, but it does not mean that there is only one bus or one type of bus.

Some embodiments of the present disclosure provide a computer-readable storage medium (e.g., a non-transitory computer-readable storage medium) having stored computer program instructions therein, where the computer program instructions, when executed on a computer, cause the computer to perform the method as described in any one of the above embodiments.

Exemplarily, the computer-readable storage medium may include, but is not limited to a magnetic storage device (e.g., a hard disk, a floppy disk or a magnetic tape, etc.), an optical disk (e.g., a compact disk (CD) or a digital versatile disk (DVD), etc.), a smart card and a flash memory device (e.g., an erasable programmable read-only memory (EPROM), a card, a stick or a key driver, etc.). The various computer-readable storage media described in the present disclosure may represent one or more devices for storing information and/or other machine-readable storage media for storing information. The term "machine-readable storage medium" may include, but is not limited to, a radio channel and various other media capable of storing, containing, and/or carrying instructions and/or data.

The embodiments of the present disclosure provide a computer program product including instructions, and the computer program product, when executed on a computer, causes the computer to perform the method as described in any one of the above embodiments.

The foregoing descriptions are merely specific implementations of the present disclosure, but the protection scope of the present disclosure is not limited thereto. Any change or replacement within the technical scope disclosed in the present disclosure shall be included in the protection scope of the present disclosure. Therefore, the protection scope of the present disclosure shall be determined based on the protection scope of the claims.

**Claims**

1. A channel information feedback method, **characterized by** comprising:

   acquiring channel information;
   determining, according to the channel information, a target codeword from a codebook set indicated by the channel information, wherein the codebook set comprises a plurality of codewords, and each of the codewords consists of one or more codeword blocks; and
   transmitting an indication parameter of the target codeword.

2. The method according to claim 1, wherein for at least one codeword of the codebook set, at least one codeword element in the codeword is determined according to a high-order polynomial of an antenna index; the indication parameter of the target codeword comprises a first parameter and a second parameter, and the first parameter and the second parameter are used to determine coefficients of respective monomials in the high-order polynomial; wherein one or more values in a value set of the second parameter are determined based on a value of the first parameter, or one or more values in a value set of the first parameter are determined based on a value of the second parameter.

3. The method according to claim 2, wherein the value of the first parameter is determined based on a first target function related to a phase parameter of a transmitted signal under the channel information, and the value of the second parameter is a real number greater than 0.

4. The method according to claim 3, wherein the first target function is a sine function and a cosine function.

5. The method according to claim 2, wherein the value of the second parameter is determined based on a second target function related to a phase parameter of a transmitted signal under the channel information, and the second target function is a quadratic sine-type function or a quadratic cosine-type function.

6. The method according to claim 3, wherein the value of the second parameter is determined based on a function related to a wavelength of the transmitted signal under the channel information.

7. The method according to claim 2, wherein a sum of all values in the value set of the second parameter is positively correlated with the value of the first parameter.

8. The method according to claim 2, wherein a sum of all values in the value set of the second parameter is negatively correlated with the value of the first parameter.

9. The method according to claim 2, wherein a number of all values in the value set of the second parameter is determined according to the value of the first parameter.

10. The method according to any one of claims 2 to 9, wherein the codeword element satisfies relations as follows:

$$G_n = p_n \exp\left( j2\pi \left( a_0 + an + bn^2 \right) \right),$$

$$G_n = p_n \exp\left( j2\pi \left( a_0 + an + bn^2 + cn^3 \right) \right),$$

$$G_n = p_n \exp\left( j2\pi \left( a_0 + an + bn^2 + cn^3 + en^4 \right) \right),$$

wherein $G_n$ is a codeword element, n is the antenna index, $a$ is a first precoding indication parameter, $b$ is a second precoding indication parameter, c is $a$ third precoding indication parameter, e is a fourth precoding indication parameter, $a_0$ is a phase parameter of a transmitted signal under the channel information, and $p_n$ is an amplitude of the element $G_n$ in a codeword block.

11. The method according to claim 10, wherein the indication parameter of the target codeword further comprises a third parameter, and the third parameter is used to indicate a highest power of the high-order polynomial.

12. The method according to claim 11, wherein the first precoding indication parameter is determined based on the first parameter;

in a case where the third parameter is within a first preset range, an order of the highest power of the high-order polynomial is 2, and the second precoding indication parameter is determined based on the first parameter and the second parameter, or the second precoding indication parameter is determined based on the second parameter;
in a case where the third parameter is within a second preset range, an order of the highest power of the high-order polynomial is 3, and the third precoding indication parameter is determined based on the first parameter and the second parameter; and

in a case where the third parameter is within a third preset range, an order of the highest power of the high-order polynomial is 4, and the fourth precoding indication parameter is determined based on the first parameter and the second parameter.

13. A communication apparatus, **characterized by** comprising: a processor and a memory for storing instructions executable by the processor;

wherein the processor is configured to execute the instructions, to cause the communication apparatus to perform the channel information feedback method according to claims 1 to 12.

14. A computer-readable storage medium, **characterized in that** the computer-readable storage medium has computer instructions stored thereon, and the computer instructions, when executed on a communication apparatus, cause the communication apparatus to perform the channel information feedback method according to any one of claims 1 to 12.

Communication system 10

FIG. 1

RECEIVING
END

SENDTING END

S101 ACQUIRE CHANNEL
INFORMATION

S102 DETERMINE, ACCORDING TO THE
CHANNEL INFORMATION, A TARGET
CODEWORD FROM A CODEBOOK SET
INDICATED BY THE CHANNEL
INFORMATION

S103 SEND AN INDICATION
PARAMETER

DETERMINE THE TARGET CODEWORD
ACCORDING TO THE INDICATION
PARAMETER

FIG. 2

Communication apparatus 300

Transceiving module
301

Processing module
302

FIG. 3

400

402

403

Processor

Communication
interface

404

Bus

Memory

401

FIG. 4

## INTERNATIONAL SEARCH REPORT

| International application No. |
| --- |
| **PCT/CN2023/141656** |

| A. | CLASSIFICATION OF SUBJECT MATTER |
| --- | --- |

H04B 7/0456(2017.01)i

According to International Patent Classification (IPC) or to both national classification and IPC

| B. | FIELDS SEARCHED |
| --- | --- |

Minimum documentation searched (classification system followed by classification symbols)

IPC:H04B

Documentation searched other than minimum documentation to the extent that such documents are included in the fields searched

Electronic data base consulted during the international search (name of data base and, where practicable, search terms used)

CNTXT; VEN; WPABSC; ENTXTC; WPABS; ENTXT; WOTXT; CNKI; 3GPP: 信道信息, 信道状态, 信道, 反馈, 码本, 码字, 码本集, 码字块, 指示, 多项式, 天线, 索引, 序号, 编号, CSI, channel, state, codebook, set, codeword, polynomial, multinomial, antenna, index, number, indicate, feedback

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 112448747 A (SONY CORP.) 05 March 2021 (2021-03-05) description, paragraphs [0059]-[0062] | 1, 13, 14 |
| A | CN 114257341 A (ZTE CORP.) 29 March 2022 (2022-03-29) entire document | 1-14 |
| A | KR 20150112802 A (SAMSUNG ELECTRONICS CO., LTD. et al.) 07 October 2015 (2015-10-07) entire document | 1-14 |
| A | US 2013064315 A1 (FUTUREWEI TECHNOLOGIES, INC.) 14 March 2013 (2013-03-14) entire document | 1-14 |
| A | US 2015280884 A1 (SAMSUNG ELECTRONICS CO., LTD. et al.) 01 October 2015 (2015-10-01) entire document | 1-14 |
| A | WO 2020050000 A1 (SHARP KK) 12 March 2020 (2020-03-12) entire document | 1-14 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **05 February 2024** | **07 April 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/141656**

| Patent document cited in search report | | | Publication date (day/month/year) | Patent family member(s) | | | Publication date (day/month/year) |
|---|---|---|---|---|---|---|---|
| CN | 112448747 | A | 05 March 2021 | None | | | |
| CN | 114257341 | A | 29 March 2022 | None | | | |
| KR | 20150112802 | A | 07 October 2015 | KR | 102215523 | B1 | 15 February 2021 |
| US | 2013064315 | A1 | 14 March 2013 | US | 8638874 | B2 | 28 January 2014 |
| US | 2015280884 | A1 | 01 October 2015 | US | 10158408 | B2 | 18 December 2018 |
| WO | 2020050000 | A1 | 12 March 2020 | JP | 2020039073 | A | 12 March 2020 |

Form PCT/ISA/210 (patent family annex) (July 2022)